# EUROPÄISCHE PATENTSCHRIFT

(11) **EP 1 468 905 B1**
(45) Veröffentlichungstag und Bekanntmachung des Hinweises auf die Patenterteilung: **31.12.2008**
(21) Anmeldenummer: 04008122.6
(22) Anmeldetag: 02.04.2004
(51) Int. Cl.: B63C 11/52, G21C 17/01, G21C 17/013, G01N 29/04, G01N 29/22

(54) **Einrichtung zum Prüfen von unter Wasser befindlichen Anlagenteilen**
Inspection system for under water plant parts
Système de vérification d'éléments d'une installation immergés

(30) Priorität: 15.04.2003 DE 10317191
(43) Veröffentlichungstag der Anmeldung: 20.10.2004
(73) Patentinhaber: intelligeNDT Systems & Services GmbH & Co. KG, 91058 Erlangen (DE)
(72) Erfinder: Achtzehn, Hans-Jürgen, 91325 Adelsdorf (DE); Staudigel, Robert, 91315 Höchstadt (DE)
(74) Vertreter: Mörtel & Höfner

(56) Entgegenhaltungen:
- EP-A- 0 528 622
- US-A- 5 156 050
- PATENT ABSTRACTS OF JAPAN Bd. 2000, Nr. 15, 6. April 2001 (2001-04-06) -& JP 2000 338291 A (TOSHIBA CORP), 8. Dezember 2000 (2000-12-08)
- PATENT ABSTRACTS OF JAPAN Bd. 017, Nr. 010 (P-1466), 8. Januar 1993 (1993-01-08) -& JP 04 240597 A (POWER REACTOR & NUCLEAR FUEL DEV CORP; others: 01), 27. August 1992 (1992-08-27)
- PATENT ABSTRACTS OF JAPAN Bd. 004, Nr. 047 (P-006), 11. April 1980 (1980-04-11) -& JP 55 018903 A (HITACHI LTD), 9. Februar 1980 (1980-02-09)
- PATENT ABSTRACTS OF JAPAN Bd. 010, Nr. 057 (P-434), 7. März 1986 (1986-03-07) -& JP 60 201250 A (MITSUBISHI JUKOGYO KK), 11. Oktober 1985 (1985-10-11)

## Beschreibung

Die Erfindung bezieht sich auf eine Einrichtung zum Prüfen von unter Wasser befindlichen Anlagenteilen, insbesondere zum Ultraschallprüfen von Schrauben in der Kernumfassung eines nuklearen Reaktordruckbehälters.

In einer Reihe von Anwendungsfällen ist es erforderlich, eine Überprüfung sicherheitsrelevanter Anlagenteile vorzunehmen, die sich an schwer zugänglichen Stellen unter Wasser befinden. Um ein solches sicherheitsrelevantes Anlagenteil handelt es sich beispielsweise bei den Schrauben, mit denen im Reaktordruckbehälter eines Kernreaktors die Kernumfassung am Kernbehälter befestigt ist. Um eine Ultraschallprüfung dieser Schrauben zu ermöglichen, ist es erforderlich, einen Ultraschall-Prüfkopf mit Hilfe eines außerhalb des Reaktorbeckens angeordneten Manipulators in einer Wassertiefe von bis zu 10 m fernbedient auf dem Kopf der Schraube zu positionieren.

Anstelle der Verwendung eines außerhalb des Reaktorbeckens angeordneten Manipulators ist es beispielsweise aus der JP 2000-338291 A bekannt, einen Tragkörper für einen Ausleger, an dessen freien Ende ein Prüfkopf angeordnet ist, mit Hilfe einer an einer Brennelementlademaschine angeordneten Seilwinde in den gefluteten Reaktordruckbehälter senkrecht abzusenken, bis er auf einer oberen Gitterplatte aufsitzt. Mit Hilfe des Auslegers kann dann ein mit der Gitterplatte verschraubter Bolzen geprüft werden. Um eine höhere Flexibilität hinsichtlich der Positionierbarkeit des Prüfkopfes zu erzielen, ist es beispielsweise aus der JP 042 40 597 A oder der JPG0201250, die eine Eimrichtung gemäß dem einleitendem Teil der Anspruch 1 und den Anspruchs 2 zeigt, zur Überprüfung einer Plattierung eines Brennelementlagerbeckens bekannt, ein mit einem Ultraschall- Prüfkopf bestücktes ferngesteuertes Unterwasserfahrzeug einzusetzen. Ein solches Unterwasserfahrzeug hat jedoch auf Grund der zu seiner freien Manövrierbarkeit erforderlichen Antriebe, Beleuchtungseinrichtungen und Kameras ein relativ hohes Eigengewicht und hat nicht zuletzt auch wegen des deshalb erforderlichen relativ großvolumigen Schwimmkörpers entsprechend große Abmessungen, so dass Stellen im Bereich von innenliegenden Kanten, beispielsweise die Schrauben in Eckbereichen der Kernumfassung eines nuklearen Reaktordruckbehälters, nicht ohne weiteres angefahren werden können.

Um mit einem solchen Unterwasserfahrzeug den Prüfkopf auch an schwer zugänglichen Stellen positionieren zu können, ist es grundsätzlich beispielsweise aus der EP 0 461 506 B1 bekannt, den Prüfkopf am freien Ende eines sechsachsigen Manipulatorarmes anzuordnen. Die Steuerung eines derart frei beweglichen Manipulatorarmes ist jedoch aufwendig und aufgrund der abhängig von der Stellung des Manipulatorarmes auf das frei schwebende Unterwasserfahrzeug durch die Schwerkraft ausgeübten Drehmomente ist es schwierig, dieses in einem ruhenden schwebenden Zustand zu halten. Aus diesen Gründen ist das bekannte Unterwasserfahrzeug mit einer Mehrzahl von Saugnäpfen versehen, mit denen es an einer glatten Oberfläche fixiert werden muss, so dass der Einsatzbereich auf glattwandige Anlagenteile begrenzt ist.

Der Erfindung liegt nun die Aufgabe zu Grunde, eine Einrichtung zum Prüfen von unter Wasser befindlichen Anlagenteilen mit einem Unterwasserfahrzeug anzugeben, die technisch unaufwendig ist und auch in Eckbereichen einer Kernumfassung eingesetzt werden kann.

Die genannte Aufgabe wird gemäß der Erfindung gelöst mit einer Einrichtung mit den Merkmalen des Patentanspruches 1 sowie mit einer Einrichtung mit den Merkmalen des Patentanspruches 2. Entsprechend diesen Merkmalen enthält die Einrichtung zum Prüfen von unter Wasser befindlichen Anlagenteilen, insbesondere zum Ultraschallprüfen von Schrauben in der Kernumfassung eines nuklearen Reaktordruckbehälters, ein ferngesteuertes Unterwasserfahrzeug, mit dem mit Hilfe von an ihm angeordneten Antriebsaggregaten Prüfpositionen anfahrbar sind, und das an einer Stirnseite mit einem Träger versehen ist, der auschließlich um eine Schwenkachse schwenkbar ist, die parallel zu einer senkrecht zur Stirnseite verlaufenden Längsmittenachse des Unterwasserfahrzeugs orientiert ist, und der mit einer Halteeinrichtung für einen Prüfkopf versehen ist, die auf dem Träger beabstandet zur Schwenkachse angeordnet ist. Durch diese Maßnahme ist es möglich, den Prüfkopf bei ruhendem Unterwasserfahrzeug in unterschiedliche Positionen relativ zum Unterwasserfahrzeug zu verfahren, so dass auch eine Prüfung von Anlagenteilen möglich ist, die sich versetzt zur Längsmittenachse des Unterwasserfahrzeuges befinden.

In einer besonders vorteilhaften Ausgestaltung der Erfindung ist der mit dem Prüfkopf versehene Träger derart ausbalanciert, dass unabhängig von der Schwenkposition des Prüfkopfes durch die Schwerkraft praktisch kein auf den Träger um die Schwenkachse wirkendes Drehmoment ausgeübt wird. Durch diese Maßnahme können bei frei schwebendem Unterwasserfahrzeug unterschiedliche Prüfpositionen angefahren werden, ohne das es zum Ausbalancieren und Aufrechterhalten des Schwebezustandes weiterer aufwendiger Steuermaßnahmen bedarf.

Weitere vorteilhafte Ausgestaltungen der Erfindung sind in den weiteren Unteransprüchen wiedergegeben.

Zur näheren Erläuterung der Erfindung wird auf das Ausführungsbeispiel der Zeichnung verwiesen. Es zeigen:
Figur 1 eine Einrichtung gemäß der Erfindung beim Einsatz bei der Ultraschallprüfung von Schrauben in der Kernumfassung eines nuklearen Reaktordruckbehälters in einer schematischen Prinzipdarstellung,
Figuren 2 bis 4 die erfindungsgemäße Einrichtung in einer perspektivischen Darstellung, einer Draufsicht auf die Stirnseite bzw. einer Seitenansicht.

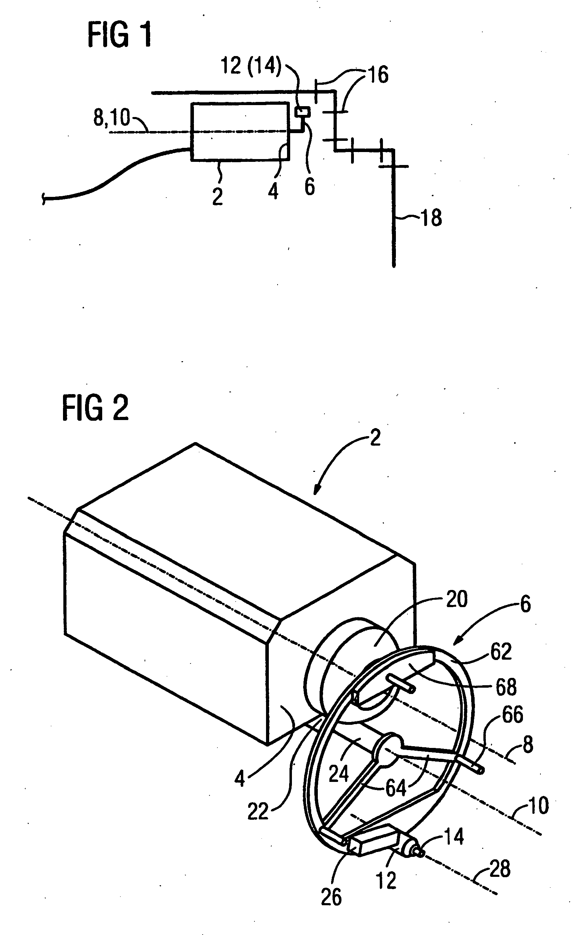

Gemäß Figur 1 umfasst die Einrichtung als Basisfahrzeug ein fernsteuerbares Unterwasserfahrzeug 2, wie es beispielsweise unter dem Handelsnamen "SUSI" der Framatome ANP GmbH bekannt ist. Gemäß der Erfindung ist das Unterwasserfahrzeug 2 an seiner Stirnseite 4 mit einem Träger 6 versehen, der am Unterwasserfahrzeug 2 schwenkbar um eine senkrecht zur Stirnseite 4 verlaufende Längsmittenachse 8 des Unterwasserfahrzeugs 2 parallele Schwenkachse 10 gelagert ist. Am Träger 6 ist beabstandet zur Schwenkachse 10 eine Halteeinrichtung 12 angeordnet, die mit einem Prüfkopf 14, im Ausführungsbeispiel ein Ultraschall-Prüfkopf wie er beispielsweise aus der EP 0 452 516 A1 bekannt ist, bestückt ist.

In der Figur ist eine Situation dargestellt, wie sie sich beim Ultraschallprüfen von Schrauben 16 in der Kernumfassung 18 eines Reaktordruckbehälters ergibt. Eine Vielzahl dieser Schrauben 16 befindet sich, wie es in der Figur dargestellt ist, in Eckpositionen der Kernumfassung 18, die auf Grund der relativ großen Abmessungen des Unterwasserfahrzeuges 2 nicht unmittelbar (mittig) angefahren werden können. Durch den dreh- oder schwenkbaren Träger 6 ist es nun möglich, Schrauben 16 in Eckpositionen auch dann zu prüfen, wenn das Unterwasserfahrzeug 2 sich seitlich versetzt zu diesen Eckpositionen befindet.

Gemäß Figur 2 ist das nur schematisch gezeichnete Unterwasserfahrzeug 2 an seiner Stirnseite 4 mit einer Kamera 20 mit integrierter Beleuchtung versehen, mit der die Fahrbewegung des Unterwasserfahrzeugs 2 visuell überwacht werden kann. Auf der Unterseite des Unterwasserfahrzeugs 2 ist ein erster Drehantrieb 22 mit einer Welle 24 angeordnet, auf der stirnseitig der Träger 6 befestigt ist. Der Träger 6 ist aus einem Ring 62 aufgebaut, der über Speichen 64 stirnseitig an der Welle 24 fixiert ist und um die Schwenkachse 10 geschwenkt, im Ausführungsbeispiel endlos gedreht werden kann. Am Ring 62 ist die Halteeinrichtung 12 angeordnet, in der der Prüfkopf 14 kardanisch gelagert ist. Ein zweiter Drehantrieb 26 ermöglicht eine Drehen des Prüfkopfes 14 um seine Mittenachse 28, um ein korrektes Aufsetzen auf den Schraubenkopf, beispielsweise ein Innenmehrkant, zu ermöglichen. In der Figur nicht dargestellte elektrische Schleifringe dienen der Stromzuführung zu den beiden Drehantrieben und zur Versorgung des Ultraschall-Prüfkopfes 14. Damit wird eine endlose Drehung des Trägers 6 ermöglicht.

An der Stirnseite des Ringes 62 sind eine Mehrzahl von Stützelementen 66, im Beispiel achsparallele Stifte, angeordnet, die bei einer Fehlpositionierung ein Beschädigen des Prüfkopfes 14 verhindern und zur Ausrichtung des Unterwasserfahrzeuges 2 (Längsachse senkrecht zur Wand) dienen.

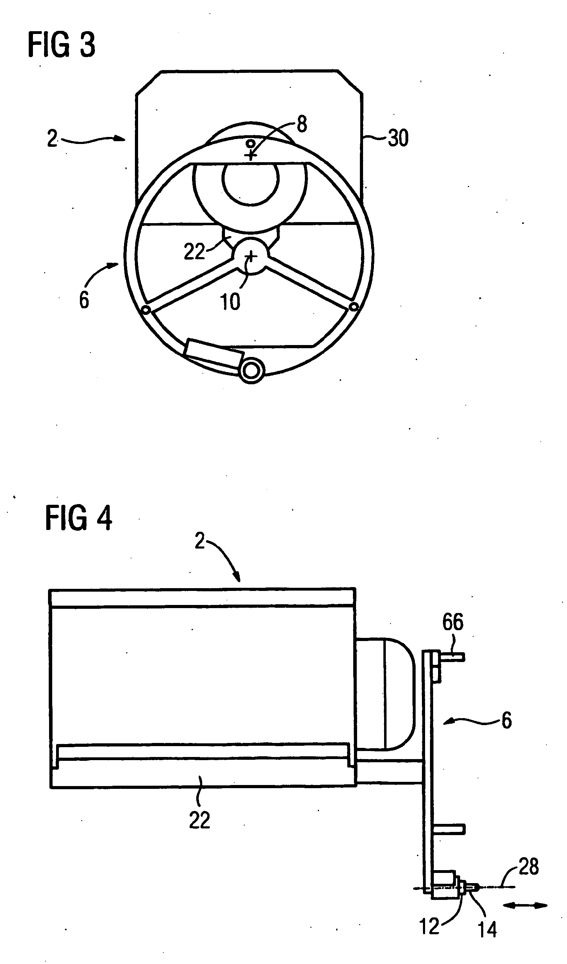

Gegenüber dem Prüfkopf 14 befindet sich außerdem ein Ausgleichsgewicht 68, um die Gewichtsbelastung auszubalancieren. Mit anderen Worten: Der mit dem Prüfkopf 14 versehene Träger 6 ist derart ausbalanciert, dass unabhängig von der Schwenkposition des Prüfkopfes 6 durch die Schwerkraft praktisch kein auf den Träger 6 um die Schwenkachse 10 wirkendes Drehmoment ausgeübt wird. Durch diese Maßname ist das Einhalten eines ruhenden Schwebezustandes auch bei einer Drehbewegung des Trägers 6 und damit das Anfahren der Prüfposition erleichtert.
In der Draufsicht auf die Stirnseite gemäß Figur 3 ist zu erkennen, dass der Prüfkopf 14 durch eine Drehung des Trägers 6 um die beabstandet zur Längsmittenachse 8 am Rand, im Beispiel unterhalb des Unterwasserfahrzeugs befindliche Schwenkachse 10 in seitliche Positionen gebracht werden kann, die annähernd mit der Seitenkante 30, d. h. dem seitlichen Rand des Unterwasserfahrzeuges 2 fluchten.

Anstelle eines in den Figuren dargestellten Ringes 62 kann als Träger 12 für den Prüfkopf 14 auch eine transparente Scheibe aus einem Kunststoff vorgesehen sein.

Gemäß Figur 4 ist der Prüfkopf 14 in der Halteeinrichtung 12 und in Richtung seiner Sende- oder Mittenachse 28 federnd gelagert. Dies ist durch den Doppelpfeil veranschaulicht. Die Stützelemente 66 erzwingen eine achsparallele Lage des Prüfkopfes 14 zur zu prüfenden Schraube und verhindern eine Überlastung bzw. Beschädigung des Prüfkopfes 14 durch seitliches Wegdriften des Unterwasserfahrzeugs 2.

Mit Hilfe des Unterwasserfahrzeuges 2 wird nun der Prüfkopf 14 über dem Schraubenkopf positioniert und durch entsprechende Steuerung der Antriebsaggregate des Unterwasserfahrzeugs 2 bündig auf den Schraubenkopf aufgesetzt. Die korrekte Positionierung und Ankopplung kann mit Hilfe der vom Prüfkopf 14 aufgenommenen Echosignale kontrolliert werden. Durch die im Unterwasserfahrzeug 2 angeordneten Antriebsaggregate wird der Prüfkopf 14 unter Ausübung eines leichten Anpressdruckes auf dem Schraubenkopf gehalten, bis die Prüfung beendet ist. Auf Grund der Präzision der Steuerung des Unterwasserfahrzeuges 2 sind weitere Andockmaßnahmen für das Halten der Prüfposition nicht erforderlich.

### Bezugszeichenliste

- 2: Unterwasserfahrzeug
- 4: Stirnseite
- 6: Träger
- 8: Längsmittenachse
- 10: Schwenkachse
- 12: Halteeinrichtung
- 14: Prüfkopf
- 16: Schraube
- 18: Kernumfassung
- 20: Kamera
- 22: erster Drehantrieb
- 24: Welle
- 26: zweiter Drehantrieb
- 28: Mittenachse
- 30: Seitenkante
- 62: Ring
- 64: Speiche
- 66: Stützelement
- 68: Ausgleichsgewicht

## Patentansprüche

1. Einrichtung zum Prüfen von unter Wasser befindlichen Anlagenteilen, insbesondere zum Ultraschallprüfen von Schrauben (16) in der Kernumfassung (18) eines nuklearen Reaktordruckbehälters, mit einem ferngesteuerten Unterwasserfahrzeug (2), mit dem mit Hilfe von an ihm angeordneten Antriebsaggregaten Prüfpositionen anfahrbar sind, und das an einer Stirnseite (4) mit einem Träger (6) versehen ist, der ausschließlich um eine Schwenkachse (10) schwenkbar ist, die parallel zu einer senkrecht zur Stirnseite (4) verlaufenden Längsmittenachse (8) des Unterwasserfahrzeugs orientiert ist, und der mit einer Halteeinrichtung (12) für einen Prüfkopf (14) versehen ist, die auf dem Träger (6) beabstandet zur Schwenkachse (10) angeordnet ist, und wobei der Träger (6) einen Ring (62) umfasst, dessen Mittelpunkt auf der Schwenkachse (10) liegt und der über wenigstens eine radiale Speiche (64) an der Welle (24) eines ersten Drehantriebs (22) fixiert ist.

2. Einrichtung zum Prüfen von unter Wasser befindlichen Anlagenteilen, insbesondere zum Ultraschallprüfen von Schrauben (16) in der Kernumfassung (18) eines nuklearen Reaktordruckbehälters, mit einem ferngesteuerten Unterwasserfahrzeug (2), mit dem mit Hilfe von an ihm angeordneten Antriebsaggregaten Prüfpositionen anfahrbar sind, und das an einer Stirnseite (4) mit einem Träger (6) versehen ist, der ausschließlich um eine Schwenkachse (10) schwenkbar ist, die parallel zu einer senkrecht zur Stirnseite (4) verlaufenden Längsmittenachse (8) des Unterwasserfahrzeugs orientiert ist, und der mit einer Halteeinrichtung (12) für einen Prüfkopf (14) versehen ist, die auf dem Träger (6) beabstandet zur Schwenkachse (10) angeordnet ist, und wobei als Träger (6) eine optisch transparente Scheibe vorgesehen ist.

3. Einrichtung nach Anspruch 1 oder 2, bei dem der mit dem Prüfkopf (14) versehene Träger (6) derart ausbalanciert ist, dass unabhängig von der Schwenkposition des Prüfkopfes (6) durch die Schwerkraft praktisch kein auf den Träger (6) um die Schwenkachse (10) wirkendes Drehmoment ausgeübt wird.

4. Einrichtung nach Anspruch 1, 2 oder 3, bei der die Schwenkachse (10) beabstandet von der Längsmittelachse (8) angeordnet ist.

5. Einrichtung nach Anspruch 4, bei der die Schwenkachse (10) am Rand des Unterwasserfahrzeugs (2) angeordnet ist.

6. Einrichtung nach Anspruch 5, bei der die Anordnung der Schwenkachse (10) am Unterwasserfahrzeug (2) und der Abstand der Halteeinrichtung (12) von der Schwenkachse derart aufeinander abgestimmt sind, dass der Prüfkopf (14) in einander gegenüberliegende Positionen gebracht werden kann, die den seitlichen Rand des Unterwasserfahrzeuges (2) überragen oder sich zumindest in seiner Nähe befinden.

7. Einrichtung nach einem der vorhergehenden Ansprüche, bei der der Träger (6) mit einer Mehrzahl von in Umfangsrichtung um die Schwenkachse (10) angeordneter und voneinander in dieser Umfangsrichtung beabstandeter Stützelemente (66) versehen ist.

8. Einrichtung nach einem der vorhergehenden Ansprüche, bei der der Prüfkopf (14) kardanisch in der Halteeinrichtung (12) gelagert ist.

9. Einrichtung nach einem der vorhergehenden Ansprüche, bei der der Prüfkopf (14) um seine zur Schwenkachse (10) parallele Mittenachse (28) drehbar in der Halteeinrichtung (12) gelagert ist.

## Claims

1. Device for inspecting submersed plant parts, in particular for ultrasound inspection of screws (16) in the core baffle (18) of a nuclear reactor pressurized vessel, having a remote-controlled underwater vehicle (2) which can be used to approach inspection positions with the aid of drive units arranged on the vehicle and which is provided at an end face (4) with a carrier (6) that can be pivoted exclusively about a pivot axis (10) which is orientated parallel to a longitudinal central axis (8), running perpendicular to the end face (4), of the underwater vehicle, and that is provided with a holding device (12) for an inspection head (14), which holding device (12) is arranged on the carrier (6) at a spacing from the pivot axis (10), and wherein the carrier (6) has a ring (62) whose centre point is located on the pivot axis (10) and which is fixed via at least one radial spoke (64) to the shaft (24) of a first rotational drive (22).

2. Device for inspecting submersed plant parts, in particular for ultrasound inspection of screws (16) in the core baffle (18) of a nuclear reactor pressurized vessel, having a remote-controlled underwater vehicle (2) which can be used to approach inspection positions with the aid of drive units arranged on the vehicle and which is provided at an end face (4) with a carrier (6) that can be pivoted exclusively about a pivot axis (10) which is orientated parallel to a longitudinal central axis (8), running perpendicular to the end face (4), of the underwater vehicle, and that is provided with a holding device (12) for an inspection head (14), which holding device (12) is arranged on the carrier (6) at a spacing from the pivot axis (10), and wherein an optically transparent disc is provided as the carrier (6).

3. Device according to Claim 1 or 2, in which the carrier (6) provided with the inspection head (14) is balanced out in such a way that virtually no torque acting on the carrier (6) about the pivot axis (10) is exerted by the force of gravity irrespective of the pivoting position of the inspection head (6).

4. Device according to Claim 1, 2 or 3, in which the pivot axis (10) is arranged at a spacing from the longitudinal central axis (8).

5. Device according to Claim 4, in which the pivot axis (10) is arranged at the edge of the underwater vehicle (2).

6. Device according to Claim 5, in which the arrangement of the pivot axis (10) on the underwater vehicle (2) and the spacing of the holding device (12) from the pivot axis are coordinated with one another in such a way that the inspection head (14) can be brought into mutually opposite positions that project over the lateral edge of the underwater vehicle (2) or are at least located in its vicinity.

7. Device according to one of the preceding claims, in which the carrier (6) is provided with a plurality of support elements (66) that are arranged about the pivot axis (10) in the circumferential direction and are spaced apart from one another in said circumferential direction.

8. Device according to one of the preceding claims, in which the inspection head (14) is mounted in the holding device (12) by universal joint.

9. Device according to one of the preceding claims, in which the inspection head (14) is mounted in the holding device (12) such that it can rotate about its central axis (28) which is parallel to the pivot axis (10).

## Revendications

1. Dispositif de contrôle de parties d'installation se trouvant sous l'eau, notamment de contrôle par ultrasons de boulons ( 16 ) de l'enceinte ( 18 ) du coeur d'une cuve sous pression de réacteur nucléaire, comprenant un véhicule ( 2 ) sous-marin télécommandé, par lequel on peut arriver à des positions de contrôle à l'aide de groupes d'entraînement qui y sont montés et qui est muni sur un côté ( 4 ) frontal d'un support ( 6 ) pouvant pivoter exclusivement autour d'un axe ( 10 ) de basculement, axe qui est orienté parallèlement à un axe ( 8 ) médian longitudinal du véhicule sous-marin, s'étendant perpendiculairement au côté ( 4 ) frontal, et qui est muni d'un dispositif ( 12 ) de maintien d'une tête ( 14 ) de contrôle, qui est montée sur le support ( 6 ) en étant à distance de l'axe ( 10 ) de pivotement et le support ( 6 ) comprenant un anneau ( 62 ) dont le centre se trouve sur l'axe ( 10 ) de pivotement et qui est immobilisé sur l'arbre ( 24 ) d'un premier entraînement ( 22 ) en rotation par au moins un rayon ( 64 ) radial.

2. Dispositif de contrôle de parties d'installation se trouvant sous l'eau, notamment de contrôle par ultrasons de boulons ( 16 ) de l'enceinte ( 18 ) du coeur d'une cuve sous pression de réacteur nucléaire, comprenant un véhicule ( 2 ) sous-marin télécommandé, par lequel on peut arriver à des positions de contrôle à l'aide de groupes d'entraînement qui y sont montés et qui est muni sur un côté ( 4 ) frontal d'un support ( 6 ) pouvant pivoter exclusivement autour d'un axe ( 10 ) de basculement, axe qui est orienté parallèlement à un axe ( 8 ) médian longitudinal du véhicule sous-marin, s'étendant perpendiculairement au côté ( 4 ) frontal, et qui est muni d'un dispositif ( 12 ) de maintien d'une tête ( 14 ) de contrôle, qui est montée sur le support ( 6 ) en étant à distance de l'axe ( 10 ) de pivotement et dans lequel il est prévu comme support ( 6 ) un disque transparent du point de vue optique.

3. Dispositif suivant la revendication 1 ou 2, dans lequel le support ( 6 ) muni de la tête ( 14 ) de contrôle est équilibré de façon à ce qu'indépendamment de la position de pivotement de la tête ( 6 ) de contrôle, il ne s'applique, sous l'effet de la force de gravité, pratiquement pas de couple de rotation agissant autour de l'axe ( 10 ) de pivotement sur le support ( 6 ).

4. Dispositif suivant la revendication 1, 2 ou 3, dans lequel l'axe ( 10 ) de pivotement est à distance de l'axe ( 8 ) médian longitudinal.

5. Dispositif suivant la revendication 4, dans lequel l'axe ( 10 ) de pivotement est sur le bord du véhicule ( 2 ) sous-marin.

6. Dispositif suivant la revendication 5, dans lequel la position de l'axe ( 10 ) de basculement sur le véhicule ( 2 ) sous-marin et la distance du dispositif ( 12 ) de maintien à l'axe de basculement sont adaptées l'une à l'autre de manière à ce que la tête ( 14 ) de contrôle puisse être mise en des positions opposées qui dépassent du bord latéral du véhicule ( 2 ) sous-marin ou qui se trouvent au moins en sa proximité.

7. Dispositif suivant l'une des revendications précédentes, dans lequel le support ( 6 ) est muni d'une multiplicité d'éléments ( 66 ) d'appui, disposés dans la direction du pourtour autour de l'axe ( 10 ) de pivotement et à distance les uns des autres dans cette direction de pourtour.

8. Dispositif suivant l'une des revendications précédentes, dans lequel la tête ( 14 ) de contrôle est montée à la cardan dans le dispositif ( 12 ) de maintien.

9. Dispositif suivant l'une des revendications précédentes, dans lequel la tête ( 14 ) de contrôle est montée autour de son axe ( 28 ) médian parallèle à l'axe ( 10 ) de pivotement en pouvant tourner dans le dispositif ( 12 ) de maintien.
